(19) Europäisches Patentamt
European Patent Office
Office européen des brevets

(11) Publication number: **0 505 737 A1**

(12) **EUROPEAN PATENT APPLICATION**

(21) Application number: **92103033.4**

(51) Int. Cl.[5]: **C09D 4/00**

(22) Date of filing: **24.02.92**

(30) Priority: **27.03.91 US 676015**

(43) Date of publication of application: **30.09.92 Bulletin 92/40**

(84) Designated Contracting States: **DE FR GB IT NL**

(71) Applicant: **GENERAL ELECTRIC COMPANY**
**1 River Road**
**Schenectady New York 12305(US)**

(72) Inventor: **Tilley, Mark Gerard**
**3301 Robinhood Drive**
**Evansville, Indiana 47720(US)**

(74) Representative: **Pratt, Richard Wilson et al**
**London Patent Operation G.E. Technical Services Co. Inc. Essex House 12/13 Essex Street**
**London WC2R 3AA(GB)**

# (54) UV curable abrasion resistant coating compositions and method.

(57) UV curable coating compositions are provided which can impart improved abrasion resistance and weathering resistance to thermoplastic substrates. An acrylated aliphatic urethane is employed as part of a base resin mixture in combination with a methacrylic functionized colloidal silica and acrylic ester monomer which is stripped of volatiles prior to being used on the surface of a thermoplastic substrate.

EP 0 505 737 A1

## Reference to Copending Application

Reference is made to copending application serial number 481,526, filed 8/13/90 for Acrylic Coated Thermoplastic Substrate which is assigned to the same assignee as the present invention and incorporated herein by reference.

## Background of the Invention

The present invention relates to UV curable coating compositions which can be applied onto a thermoplastic substrate and thereafter cured under ultraviolet radiation. More Particularly, the present invention relates to a method for imparting improved abrasion resistance and weatherability to a thermoplastic substrate, such as a polycarbonate substrate.

Chung, U.S. Patent 4,486,504, discloses a solventless ultraviolet radiation curable coating composition comprising colloidal silica, the acid hydrolysis product of an acryloxyfunctional or glycidoxy functional silane or mixtures thereof, and a photoinitiator. Chung discloses that the coating composition may be applied directly to a substrate, such as polyester film, and cured in one pass of UV radiation in a matter of seconds to yield an adherent, abrasion resistant coating. Another abrasion resistant UV curable coating composition is disclosed in Chung, U.S. Patent No. 4,478,876, which teaches a composition comprising a multifunctional acrylate monomer, colloidal silica, acryloxy functional silanes and photoinitiators. Furthermore, Olson, et al, U.S. Patent No. 4,455,205, discloses a UV curable silica hardcoat containing a photoinitiator, the hydrolysis product of a silylacrylate and aqueous colloidal silica, and optionally a multifunctional acrylate. While the aforementioned UV radiation curable coating compositions provide adherent and abrasion resistant coated articles when cured on a thermoplastic substrate, such as a polycarbonate substrate, it is often desirable to improve the weatherability of these coated thermoplastics particularly when used in outdoor applications.

In copending application serial number 481,526, ultraviolet radiation curable coating compositions are described which utilize acrylated urethanes in combination with multifunctional acrylate ester monomers and acrylate functionalized colloidal silica, along with a photoinitiator and an ultraviolet radiation absorber to produce coating compositions when cured onto polycarbonate substrates exhibiting improved weatherability along with abrasion resistance. While improved weatherability can be achieved as a result of the incorporation of acrylated urethanes, it also has been found that the abrasion resistance of the cured coating is often reduced.

## Summary of the Invention

The present invention is based on the discovery that UV curable coating compositions can be made which can be used to make thermoplastic articles having both improved abrasion and weather resistance. An acrylated aliphatic urethane can be initially used at an effective amount in a UV curable base resin formulation comprising a methacrylic functionalized colloidal silica and acrylic resin. Stripping of the base resin formulation to a viscosity of at least 10 centipoise prior to its application and cure can provide optimum abrasion and weather resistance.

## Statement of the Invention

There is provided by the present invention, a UV curable coating composition having improved weatherability while maintaining its abrasion resistance in the cured state comprising by weight,

(A) 100 parts of a base resin,

(B) 0.01 to 15 parts and preferably 0.2 to 5 parts of a photoinitiator,

(C) 0 to 30 parts and preferably 0.5 to 20 parts of a UV screen, where the base resin of (A) is a stripped mixture having a viscosity of at least 10 centipoises at 25°C and comprises by weight,

(D) 100 parts of an acrylate functionalized colloidal silica,

(E) 30 to 2000 parts, and, preferably 50 to 500 parts of acrylic ester monomer and,

(F) 1 to 2000, and, preferably 20 to 100 parts of an acrylated aliphatic urethane.

In the practice of the preferred form of the present invention, a silylarylate is stirred with an aqueous dispersion of colloidal silica in the presence of a $C_{(1-8)}$ alkanol, such as, isopropanol. The acrylated aliphatic urethane and acrylic ester monomer can be added to the mixture. The resulting mixture is then stripped of volatiles under reduced pressure to a desirable viscosity such as, greater than 10 centipoise at 25°C, to form the base resin. Addition of photoinitiator and UV absorber as defined hereinafter, results in the production of the coating composition of the present invention.

The coating compositions of the present invention can be applied to and cured on various thermoplastic substrates including, for example, polycarbonate resin substrates and polyester resin substrates to produce abrasion resistant thermoplastic articles. Among the substrates which can be treated in accordance with the invention, are substrates made from polycarbonate resin which is preferably derived from bisphenol A (2,2-bis(4-hydroxyphenyl)propane) and a carbonate precursor such as phosgene. Any aromatic polycarbonate can be employed to provide a suitable substrate to be coated. Polycarbonate homopolymers or copolymers can be used. Typical of the dihydric phenols which can be employed to make polycarbonates useful in the practice of the invention are bisphenol A (2,2-bis(4-hydroxyphenyl)propane), bis(4-hydroxyphenyl)methane, 2,2-bis(4-hydroxy-3-methylphenyl)-propane, 3,3-bis(4-hydroxyphenyl)pentane, 2,2-bis(3,5-dibromo-4-hydroxyphenyl)propane, and bis(3-chloro-4-hydroxyphenyl)methane. Other dihydric phenols of the bisphenol type are also available and are disclosed in U.S. Patent Nos. 2,999,835, 3,028,365 and 3,334,154.

It is, of course, possible to employ two or more different dihydric phenols or a copolymer of a dihydric phenol with a glycol or with hydroxy or acid terminated polyester, or with a dibasic acid in the event a carbonate copolymer or interpolymer rather than a homopolymer is desired for use in the preparation of the polycarbonates used in the invention. Also included in the practice of the invention, are blends of any of the above materials to provide the aromatic carbonate polymer substrate.

The carbonate precursor can be either a carbonyl halide, a carbonate ester or a haloformate. The carbonyl halides which can be employed herein are carbonyl bromide, carbonyl chloride and mixtures thereof. Typical of the carbonate esters which can be employed are diphenyl carbonate, di(halophenyl)-carbonates, such as di(chlorophenyl)carbonate, di(bromophenyl)carbonate, di(trichlorophenyl)carbonate, di-(tribromophenyl)carbonate, etc., di(alkylphenyl)carbonates such as di(tolyl)carbonate, etc., di(naphthyl)-carbonate, di(chloronaphthyl)carbonate, phenyl tolyl carbonate, chlorophenyl chloronaphthyl carbonate, etc., or mixtures thereof. The haloformates suitable for use herein include bishaloformates of dihydric phenols (bischloroformates of hydroquinone, etc.) or glycols (bishaloformates of ethylene glycol, neopentyl glycol, polyethylene glycol, etc.). While other carbonate precursors will occur to those skilled in the art, carbonyl chloride, also known as phosgene is preferred.

Also included are the polymeric derivatives of a dihydric phenol, a dicarboxylic acid and carbonic acid. These are disclosed in U.S. Patent No. 3,169,121 which is incorporated herein by reference.

The aromatic polycarbonates used in the practice of the invention can be prepared by employing a molecular weight regulator, an acid acceptor and a catalyst. The molecular weight regulators which can be employed are mononydric phenols such as phenol, para-tertiarybutyl-phenol, parabromophenol, primary and secondary amines, etc. Preferably phenol is employed as the molecular weight regulator.

A suitable acid acceptor may be either an organic or an inorganic acid acceptor. A suitable organic acid acceptor is a tertiary amine and includes such materials as pyridine, triethylamine, dimethylaniline, tributylamine, etc. The inorganic acid acceptor may be one which can be either a hydroxide, a carbonate, a bicarbonate, or a phosphate of an alkali or alkaline earth metal.

The catalysts which can be employed to make aromatic polycarbonates are tertiary amines, such as, triethylamine, tripropylamine, N,N-dimethylaniline, quarternary ammonium compounds, such as, tetraethylammonium bromide, cetyl triethyl ammonium bromide, tetra-n-heptyl-ammonium, iodide, tetra-n-propyl-ammonium bromide, tetramethyl ammonium chloride, tetramethyl ammonium hydroxide, tetra-n-butyl-ammonium iodide, benzyltrimethylammonium chloride and quarternary phosphonium compounds such as, n-butyltriphenyl phosphonium bromide and methyltriphenyl phosphonium bromide.

Also included are branched polycarbonates wherein a multifunctional aromatic compound is reacted with a dihydric phenol and carbonate precursor to provide a thermoplastic randomly branched polycarbonate. The multifunctional aromatic compounds can contain at least three functional groups such as carboxyl, carboxylic anhydride, haloformyl groups or mixtures thereof. Some of the multifunctional aromatic compounds which can be employed are: trimellitic anhydride, trimellitic acid, trimellitic trichloride, 4-chloroformyl phthalic anhydride, pyromellitic acid, pyromellitic dianhydride, mellitic acid, mellitic anhydride, trimesic acid, benzophenonetetracarboxylic acid, benzophenonetetracarboxylic anhydride and the like. The preferred multifunctional aromatic compounds are trimellitic anhydride, trimellitic acid, and their haloformyl derivatives. In addition, blends of a linear polycarbonate and a branched polycarbonate are also included.

In addition to polycarbonates, other substrates can be suitably rendered abrasion and weather resistant by the coating compositions of the present invention. There are included, polyester substrates, polymethylmethacrylate and high strength films such as polyacrylates, polyamides, nylon and plastic surfaces which have been metallized by such techniques as sputtering, electroplating and vapor deposition.

Some of the acrylic ester monomers which can be used in the base resin of the coating composition of the present invention are included within the formula,

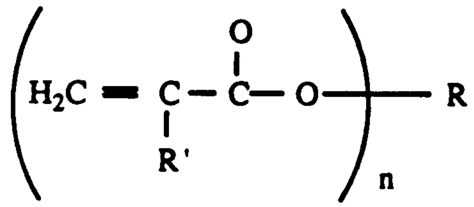

where R is a $C_{(1\text{-}20)}$ hydrocarbon radical, $R^1$ is hydrogen or $C_{(1\text{-}8)}$ alkyl and n is an integer equal to 1 to 4, and preferably from 2 to 3.

The acrylic ester monomer is meant to include alkyl acrylates such as multifunctional methacrylates.

Preferably R is a $C_{(1\text{-}20)}$ aliphatic hydrocarbon residue or an aromatic hydrocarbon residue having from 6 to about 10 carbon atoms which can contain substituent groups such as the halogens, i.e., fluorine, chlorine, bromine, and iodine, hydroxyl, -COOH, and -COOR' groups where $R^1$ is as previously defined.

Included within the formula are difunctional acrylic monomers, or diacrylates, where n is 2, trifunctional acrylic monomers, or triacrylates, where n is 3, and tetrafunctional acrylic monomers, or tetraacrylates where n is 4.

These acrylic ester monomers and their production are well known to those skilled in the art. One method of producing the di-, tri-, and tetraacrylate esters involves reacting acrylic acid with a di-, tri-, or tetrahydroxyl compound to produce the diester, triester or tetraester. Thus, for example, acrylic acid can be reacted with ethylene glycol to produce ethylene glycol diacrylate.

Although the coating compositions may contain only one of said acrylic ester monomers, preferred coating compositions contain a mixture of two multifunctional monomers, preferably a diacrylate and a triacrylate. When the coating compositions can contain a mixture of acrylate monomers, it is preferred that the ratio, by weight, of the diacrylate to the triacrylate be from about 30/70 to about 70/30. Exemplary mixtures of diacrylates and triacrylates include mixtures of hexanediol diacrylate with pentaerythritol triacrylate, hexanediol diacrylate with trimethylolpropane triacrylate, diethyleneglycol diacrylate with pentaerythritol triacrylate, and diethyleneglycol diacrylate with trimethylolpropane triacrylate.

While the corresponding coatings may likewise contain the ultraviolet light reaction product of a single multifunctional acrylate monomer, coatings containing the photoreaction produce of two multifunctional acrylate monomers, preferably a diacrylate and a triacrylate, are preferred. Chung, U.S. Patent 4,478,876, lists specific suitable multifunctional acrylate ester monomers and is included herein by reference.

Acrylate functionalized colloidal silica is obtained by forming a hydrolysis product of silylacrylate and aqueous colloidal silica as set forth in Olson, et al, U.S. Patent No. 4,491,508 which is incorporated herein by reference. Olson, et al, U.S. Patent No. 4,455,205, Chung, U.S. Patent 4,478,876, and Chung, U.S. Patent No. 4,486,504, are also incorporated herein by reference. Functionalized colloidal silica is colloidal silica which is dispersible in an organic medium due to the replacement of hydroxyl groups with organic groups. The term acrylate functionalized colloidal silica is meant to include alkylacrylate functionalized colloidal silica. The functional groups are preferably acrylate or methacrylate groups.

Some of the silyl acrylates which can be used in the practice of the invention are compounds having the formulas,

$CH_2=CCH_3CO_2\text{-}CH_2CH_2\text{-}Si(OCH_2CH_3)_3$'
$CH_2=CHCO_2\text{-}CH_2CH_2\text{-}Si(OCH_3)_3$'
$CH_2=CCH_3CO_2\text{-}CH_2CH_2CH_2\text{-}Si(OCH_2CH_3)_3$'
$CH_2=CHCO_2\text{-}CH_2CH_2\text{-}Si(OCH_2CH_3)_3$'
$CH_2=CCH_3CO_2\text{-}CH_2CH_2CH_2\text{-}Si(OCH_2)_3$'
$CH_2=CHCO_2\text{-}CH_2CH_2CH_2\text{-}Si(OCH_3)_3$'
$CH_2=CCH_3CO_2\text{-}CH_2CH_2CH_2\text{-}Si(OCH_2CH_3)_3$'
$CH_2=CHCO_2\text{-}CH_2CH_2CH_2\text{-}Si(OCH_2CH_3)_3$'
$CH_2=CCH_3CO_2\text{-}CH_2CH_2CH_2CH_2\text{-}Si(OCH_3)_3$'
$CH_2=CHCO_2\text{-}CH_2CH_2CH_2CH_2\text{-}Si(OCH_3)_3$'
$CH_2=CCH_3CO_2\text{-}CH_2CH_2CH_2CH_2\text{-}Si(OCH_2CH_3)_3$'
$CH_2=CHCO_3\text{-}CH_2CH_2CH_2CH_2\text{-}Si(OCH_2CH_3)_3$'
etc.

The aqueous colloidal silica is a dispersion of submicron-sized silica ($SiO_2$) particles in an aqueous or other solvent medium. It is this polysiloxane backbone which provides the hardcoat composition with many of the advantages inherent in silicone products such as a wide-ranging resistance to environmental extremes.

Dispersions of colloidal silica are available from chemical manufacturers such as E.I. Dupont de Nemours and Nalco Chemical Company. Colloidal silica is available in either acidic or basic form. However, for purposes of the present invention it is preferable that the acidic form be utilized. It has been found that superior hardcoat properties can be achieved with acidic colloidal silica (i.e., dispersions with low sodium content). Alkaline colloidal silica also may be converted to acidic colloidal silica with additions of acids such as HCl or $H_2SO_4$ along with high agitation.

An example of a satisfactory colloidal silica for use in these coating compositions is Nalcoag 1034A, available from Nalco Chemical Company, Chicago, I11. Nalcoag 1034A is a high purity, acidic pH aqueous colloidal silica dispersion having a low $Na_2O$ content, a pH of approximately 3.1 and an $SiO_2$ content of approximately 34 percent by weight. In the examples given below the weight in grams or parts by weight of the colloidal silica includes its aqueous medium. Thus, for example, 520 grams of Nalcoag 1034A colloidal silica represents, approximately, 177 grams of $SiO_2$ by weight. It should be noted, however, that the aqueous medium is utilized as a convenient way of handling the colloidal silica and does not form a necessary part of the hardcoat compositions of the present invention. In fact, it is to be emphasized that these coating compositions find particularly beneficial utility in the face that they may be part of a solventless system.

The term colloidal silica is intended to represent a wide variety of finely divided $SiO_2$ forms which can be utilized to form the hardcoat compositions of the present invention without the necessity of undue experimentation. Further description can be found in U.S. Patent No. 4,027,073.

Acrylated aliphatic urethanes useful in the practice of the invention are multifunctional aliphatic acrylated urethanes wherein the acrylic or methacrylic groups provide the functionality. Suitable aliphatic acrylated urethanes are shown by Nagarajan, Synthesis and Characterization of Radiation Curable Polyurethanes Containing Pendant Acrylate Groups, Polymer Engineering and Science, Mid-November, 1986, Vol. 26, No. 20, pg. 1442 to 1450 incorporated herein by reference. Nagarajan teaches that a diisocyanate may be reacted with a diol to form a polyurethane having pendant hydroxyl groups which can then be reacted with an isocyanato ethyl methacrylate to yield a polyurethane containing pendant acrylate groups. Another UV-curable polyurethane acrylate resin is disclosed by Chiang, Preparation and Properties of the UV-Curable Polydimethylsiloxane Urethane Acrylate, Die Angewandte Makromolekulare Chemie 160 (1988) 41-66 (Nr. 2573) pg. 41 to 66 also incorporated herein by reference. Chiang discloses UV-curable polyurethane acrylate resin based on hydroxy terminated polydimethylsiloxane (PDMS) soft segments with molecular weight 1800 and 2,4-toluene dilsocyanate (TDI)/2-hydroxyethyl methacrylate (HEMA) hard segments. Acrylated aliphatic urethanes are commercially available. Acrylated aliphatic polyurethanes are known coating materials that can provide flexible coatings. Acrylated aliphatic urethanes also includes alkylacrylated urethanes such as methacrylated urethanes.

The UV screens or ultraviolet light absorbing compounds are well known in the art and are compounds which act to absorb or screen out the ultraviolet radiation. Illustrative of these compounds are those of the hydroxy benzophenone and benzotriazole series, the cyanoacrylates, and benzylidene malonates. Examples of these include: 2,4-dihydroxybenzophenone, 2-hydroxy-4-methoxybenzophenone, 2-hydroxy-4-octyloxybenzophenone, 2-hydroxy-4-(acryloxyethoxy)benzophenone and polymers thereof, 2,2-dihydroxy-4-methoxybenzophenone, 2,2'4,4'-tetrahydroxybenzophenone, 2,2'-dihydroxy-4,4'-dimethoxybenzophenone, 2-(2'hydroxy-5'-methylphenyl)benzotriazole, 2-(2'-hydroxy-5'-t-octylphenyl)benzotriazole, 2-[2'-hydroxy-3',5'-di(t-amyl)phenyl]benzotriazole, 2-[2'-hydroxy-3',5'-di(alpha, alpha-dimethylbenzyl)phenyl]benzotriazole, 2-(2'-hydroxy-3'-t-butyl-5'-methylphenyl)-5-chlorobenzotriazole, 2-[2'-hydroxy-3',5'-di(t-butyl)phenyl]-5-chlorobenzotriazole, 1,6-hexanediol diester and polyethylene glycol esters of 2-[2'-hydroxy-3'-t-butyl-5'-(2-propylcarboxy)phenyl]benzotriazole, ethyl 2-cyano-3,3-diphenylacrylate, 2-ethylhexyl 2-cyano-3,3-diphenylacrylate, 2-ethyl-2'-ethoxyoxalanide, 2-ethyl-2'-ethoxy-5'-t-butyloxalanide, and 2,4-di-(2,4-dimethylphenyl)-6-(2-hydroxy-4-octyloxyphenyl)-1,3,5-trizine. Further examples of ultraviolet light absorbers which may be used in the practice of this invention may be found in U.S. Patent No. 3,043,709, which is incorporated herein by reference. A preferred ultraviolet radiation absorber is the benzene sulfonate ester of a benzotriazole (Cyasorb 5411 is a suitable benzotriazole ultraviolet radiation light absorber sold by American Cyanamid). Benzene sulfonate esters of benzotriazoles are set out in Olson, U.S. Patent No. 4,344,830, which is incorporated herein by reference.

Suitable photoinitators include the ketone-type photoinitiators such as benzophenone, and other acetophenones, benzil, benzaldehyde and O-chlorobenzaldehyde, xanthone, thioxanthone, 2-chlorothioxanthone, 9,10-phenanthrenquinone, 9.10-anthraquinone, methylbenzoin ether, ethylbenzoin ether, isopropyl benzoin ether, a,a-diethoxyacetophenone, a,a-dimethoxyacetophenone, 1-phenyl-1,2-propanediol-2-o-benzoyl)oxime, and a,a-dimethoxy-a-phenylacetophenone. The preferred photoinitiator is 2,4,6-trimethylbenzoyldiphenylphosphine oxide.

The coating composition may be applied to the thermoplastic substrate in known ways including dipping and spraying and then exposed to ultraviolet radiation to provide a cured coating exhibiting abrasion resistance, adherence to the substrate, and improved weatherability and flexibility. A preferred process is set out in European Patent Application 0,228,671 filed December 18, 1986 published July 15, 1987 and incorporated herein by reference. The process involves applying the coating composition to a flexible transparent thermoplastic substrate, contacting the coating composition with a drum having the desired surface characteristics, ultraviolet radiation curing of the coating composition while the coating composition is in contact with the drum surface by passing UV radiation through the substrate and then separating the coated substrate from the drum surface.

The substrates may be of various shapes and thicknesses. Preferably the substrates are polycarbonate sheet or film having thicknesses of from 5 mils to 250 mils, more preferably from 10 mils to 30 mils and most preferably 15 mils.

The coating thickness is preferably from 2 micrometers to 30 micrometers, more preferably from 5 micrometers to 15 micrometers, and most preferably about 11 micrometers.

Amounts of antioxidants (such as IRGANOX 1076) and hindered amine light stabilizers (HALS) (such as Tinuvin 144) may be added to improve the weathering performance of certain coatings. Antioxidants and hindered amine light stabilizers may be present at levels of from 0.1 to 5% by weight based on the total weight of the coating composition.

In order that those skilled in the art will be better able to practice the present invention, the following example is given by way of illustration and not by way limitation. All parts are by weight.

Example

There was added 7 g of methacryloylpropyltrimethoxysilane with stirring to a mixture of 46.8 g of Nalco 1034A aqueous colloidal silica dispersion and 225 g of isopropanol. There were also added to the mixture 0.01 g of methoxyhydroquinone, 7.8 g of ALU-2 ,an acrylated aliphatic urethane, of the Echo Resins Company, and 11.7 g of hexanedioldiacrylate. The mixture was allowed to stir at room temperature for at least 72 hours. Volatiles were removed from the mixture under reduced pressure resulting in the formation of a viscous free-flowing clear base resin.

A UV curable formulation was prepared by adding 2 parts of 2,4,6-trimethylbenzoyldiphenyl phosphine oxide (Lucirin TPO, of BASF Co), and 6 parts of Cyasorb 5411 to 92 parts of the above-described base resin. Additional UV curable mixtures were prepared following the same procedure where the weight % of the components used in the base resin were varied.

The UV curable formulations were applied onto a Lexan® polycarbonate film utilizing a line speed at 15 fpm and a roll coating temperature of 170 F. The resulting coating was 7.5 microns thick and exhibited a Taber Haze of about 8.0 at 500 cycles. The Taber Haze which indicates the abrasion resistance of the coating was measured with a Taber Abraser. The Taber Haze was determined by measuring the change in percent haze (Δ%H) using a Gardner Model UX10 Haze Meter before and after 500 cycles of abrasing on a Model 174 Taber Abraser equipped with CS10F wheels and 500 g weights. The following results were obtained where silica is the calculated weight % of silicon dioxide solids in the cured coating, MAPTMS is methacryloylpropyltrimethoxysilane, HDDA is hexanedioldiacrylate and Urethane is acrylated aliphatic urethane, and Taber is the % haze (Δ % H) calculated with a Gardner Model UX10 Haze Meter:

Table 1

| Viscosity and Taber Haze of various Coating formulations containing 0% to 20.7T Acrylated Aliphatic Urethanes | | | | | | |
|---|---|---|---|---|---|---|
| Silica | MAPTMS | HDDA | URETHANE | Roll T/SPEED | Viscosity (cps 35C) | Taber (500) |
| 40% | 11% | 49 | 0 | 120/20 | 60/90 | 6-8 |
| 40% | 11% | 36.7 | 12.3-ALU-2 | 130/15 | 365 | 11.3 |
| 40% | 11% | 29.4 | 19.6-ALU-2 | 170/15 | 1550 | 8.3 |
| 42.3% | 5.9% | 31.1 | 20.7-ALU-2 | 170/15 | 1400 | 8.6 |

Additional coated samples were prepared and UV cured on polycarbonate films following the same procedure. The resulting coated samples were then tested for weathering resistance by placing the coated

samples in a QUV device sold by the Q-Panel Company of Cleveland, Ohio. The samples were set to consecutive cycles of fluorescent UV light using A bulbs for an 8 hour light period at 50°C followed by a 4 hour dark, high humidity period at 40°C. The change in haze was measured using a Gardner Model UX10 Haze Meter after 3600 hours. In addition "Hours to Microcrack" and "Yellow Index" "YI" were also measured. The following results were obtained:

Table 2

| Weathering Performance of Coatings Containing Acrylated Aliphatic Urethanes on Polycarbonate Film | | | | | |
|---|---|---|---|---|---|
| Silica | MAPTMS | Urethane | Hrs to Microcrack | YI | Haze (3600 hrs) |
| 40% | 11% | 0 | 2870 | 2.2 | 7.0* |
| 40% | 11% | 12.3%-ALU-2 | 3100 | 1.8 | 7.1 |
| 40% | 11% | 19.69%-ALU-2 | 3100 | 1.4 | 5.2 |
| 42.3% | 5.9% | 20.7%-ALU-2 | 3700 | 1.6 | 4.0 |

*Prepared by reflux method

The data shown in Tables 1 and 2 above establish that the addition of the acrylated aliphatic urethane followed by stripping of the mixture results in cured coatings having improved abrasion and weathering resistance.

Although the above example is directed to only a few of the very many variables which can be used in making the UV curable abrasion resistant coating compositions of the present invention, it should be understood that the present invention is directed to a much broader variety of such coating compositions as shown in the description preceding this example with respect to the methacrylic functionalized colloidal silica, the acrylic ester monomer and acrylated aliphatic urethane used in a base resin as well as the various photoinitiators and UV screens shown in the descrpition preceding this example.

## Claims

**1.** A UV curable abrasion resistant coating composition comprising by weight,
(A) 100 parts of a base resin,
(B) 0.01 to 15 parts of a photoinitiator,
(C) 0 to 30 parts of a UV screen,
where the base resin of (A) is a stripped mixture having a viscosity of at least 10 centipoises at 25°C and comprises by weight,
(D) 100 parts of a methacrylic functionalized colloidal silica,
(E) 30 to 2000 parts of acrylic ester monomer, and
(F) 1 to 2000 of an acrylated aliphatic urethane.

**2.** A UV curable coating composition in accordance with claim 1, where the methacrylic functionalized colloidal silica is a colloidal silica functionalized with methacrylopropyltrimethoxysilane.

**3.** A UV curable composition in accordance with claim 1, where the acrylic ester monomer is hexanediol diacrylate.

**4.** A UV curable composition in accordance with claim 1, where the acrylated aliphatic urethane is a polyurethane containing pendent acrylate groups.

**5.** A UV curable composition in accordance with claim 1, where the photoinitiator is 2,4,6-trimethylbenzyldiphenylphosphineoxide.

**6.** A UV curable composition in accordance with claim 1, where the UV screen is a benzene sulfonate ester of a benzotriazole

European Patent Office

# EUROPEAN SEARCH REPORT

Application Number

EP 92 10 3033

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| D,Y | GB-A-2 089 826 (GENERAL ELECTRIC COMPANY)<br>& US-A-4 478 876<br>* the whole document *<br>--- | 1-5 | C09D4/00 |
| Y | US-A-4 065 587 (TING)<br>*claims*<br>--- | 1-5 | |
| A | US-A-4 785 076 (SHU)<br>----- | 1,6 | |

TECHNICAL FIELDS SEARCHED (Int. Cl.5 )

C09D
C08K

The present search report has been drawn up for all claims

| Place of search | Date of completion of the search | Examiner |
|---|---|---|
| THE HAGUE | 23 JUNE 1992 | ANDRIOLLO G. R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)